Europäisches Patentamt

European Patent Office

Office européen des brevets

(19)

(11) **EP 1 324 005 A2**

(12) **EUROPEAN PATENT APPLICATION**

(43) Date of publication:
**02.07.2003 Bulletin 2003/27**

(51) Int Cl.7: **G01B 11/245**, G01B 11/24

(21) Application number: **02380105.3**

(22) Date of filing: **23.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **03.12.2001 ES 200102686**

(71) Applicant: **PATENTES TALGO, S.A.**
**28230 Las Rozas (Madrid) (ES)**

(72) Inventors:
• **Lopez Gomez, Jose Luis**
  **28230 Las Rozas (Madrid) (ES)**

• **Sanchez Revuelta, Angel Luis**
  **28230 Las Rozas (Madrid) (ES)**
• **Gomez Gomez, Carlos Javier**
  **28230 Las Rozas (Madrid) (ES)**
• **Navarro Belsue, Rafael**
  **28230 Las Rozas (Madrid) (ES)**
• **Valerio Cascajo, Roberto**
  **28230 Las Rozas (Madrid) (ES)**
• **Bariabar Azcarraga, Begona**
  **28230 Las Rozas (Madrid) (ES)**

(74) Representative: **Elzaburu, Alberto de et al**
**Elzaburu S.A.**
**Miguel Angel, 21**
**28010 Madrid (ES)**

(54) **Device and process for measuring ovalization, buckling, planes and rolling parameters of railway wheels**

(57)     Device and process for measuring ovalization, buckling, planes and rolling parameters of railway wheels by use of a rolling rail (2) along which the outermost part of the wheel (1) to be measured is made to pass at approximately 10 km/h. Various sensors (7) detect the presence of the wheel in the measuring area, such that they activate the device. A collimated laser beam system (6) projects a solid light beam on the wheel, constantly interfering therewith producing images which are reflected on a screen (4). These images are recorded by a camera (5) and sent to an artificial viewing system (9) where the necessary parameters are calculated, on the basis of which the required measurements are obtained. The results obtained are sent to a computer (10) where the measurement reports are generated.

Fig. 1a

**EP 1 324 005 A2**

## Description

## FIELD OF THE INVENTION

The present invention generally relates to the measuring of ovalization, buckling, planes and rolling parameters relative to flange thickness and height, qR, distance between the inside faces and diameter of railway wheels and other parameters using artificial viewing methods to obtain reproductions of the wheel profile. More specifically, the invention concerns a device and a process expressly developed to perform such measurements.

## BACKGROUND OF THE INVENTION

The use of artificial viewing systems is already known to obtain reproductions of profiles of railway wheels. An example of the prior state-of-the-art is represented by the document EP-A-O 985 904, in which an arrangement and a process for measuring the ovalization and diameter of railway wheels with the aid of artificial viewing is described. The present invention adds a new and original development of the invention claimed in said previous document.

## SUMMARY OF THE INVENTION

The invention basically consists in that over a train circulating at approximately 10 km/h, a laser beam is projected over the wheel to be measured, constantly interfering with the flange and rolling band. After inciding on the wheel, the light beam is projected on a screen and the image produced is captured by a camera at different moments of time. Said camera transmits the images to an artificial viewing system, where the parameters necessary to obtain the ovalization, buckling, planes and rolling parameters are calculated. Said parameters are processed in the system itself and sent to a computer which displays the results. Said computer can be connected to other measuring equipment, as, for example, automatic wheel defect detection equipment, measuring equipment for diameter difference between wheels of a same axle, etc.

More specifically, the invention provides a device for measuring ovalization, buckling, planes and rolling parameters of railway wheels using artificial viewing, comprising on each side of the track a measuring area; a rolling rail along which the wheel to be measured is made to pass at a speed of about 10 km/h; a counterrail to centre said wheel during the measuring process; a collimated laser beam coming from a laser light system illuminating the flange and rolling profile, while the wheel crosses the measurement area; a screen over which the contour shadow is projected; a video camera to capture and transmit the images projected over the screen; an artificial viewing system connected to the video camera which digitalises and processes the received images, obtaining the parameters to be measured relative the ovalization, buckling, planes and rolling parameters; a computer connected to the artificial viewing system, showing the obtained values and storing the captured images; optical wheel position sensors detecting the presence of a wheel and enabling and disabling image capture; and a control system governing the sensors.

The device of the invention uses suitable mathematical algorithms, including compensation of diffraction and potential optical defects, such that the profile is obtained with high resolution independently from the instantaneous distance between the wheel and the screen.

According to the invention, the control system calculates the vehicle speed from the time spent between the moments of activation of the first wheel sensor and the second one.

Likewise, the control system calculates the number of images the video camera must capture and send per second to the artificial viewing system as a function of the train speed, so that the number of images processed for each wheel is the same in all cases, independently from speed.

According to another aspect of the invention, the artificial viewing system is designed to process at least 50 images per wheel.

Preferably, the control system orders the video camera to only capture images when there is a single wheel in the measuring area.

It is also preferable that the computer is connected to other measuring facilities, so that said computer processes all the data obtained by the different facilities.

According to a further aspect of the invention, the measuring area is a few millimetres below the rolling rail level, so that the screen and collimated laser system are housed beneath said rail, the wheel having access to the measuring area by means of a cradle-shaped rail.

Alternatively, the measuring area can be at the same level as the rolling rail, such that the screen and collimated laser system are housed in a mechanism capable of being adapted to the rolling rail on the passing of a train, recovering the measuring position once the wheel has passed.

Moreover, the invention provides a process for measuring ovalization, buckling, planes and rolling parameters of railway wheels in which the aforementioned device is used. According to said process, the measuring device is activated by optical wheel position sensors and a beam of collimated light coming from a laser system is projected over the wheel, such that it constantly illuminates the flange and the rolling band while the wheel passes through the measuring area, obtaining images which are projected over a screen and captured by a video camera, processing said images in an artificial viewing system and displaying the results obtained in a computer.

## BRIEF DESCRIPTION OF THE DRAWINGS

The invention is illustrated in detail in the attached drawings, in which:

- Figure 1 shows two variants of the arrangement of the device:

- Figure 1a shows the device in which the measuring area is below the rail level, the laser system and screen being located below it. Access to the measuring area (L) is possible by means of a cradle-shaped rail.
- Figure 1b shows the device in which the measuring area is at the same level as the rail, the laser system and screen being housed in a mechanism which adapts to the passage of the wheel, recovering the measuring position once the wheel has passed.
- Figure 2 shows the rolling of the wheel along the rail before and after entering the measuring area (L) for the variant of Figure 1a. Likewise, it shows the screen where the rolling profile images are projected.
- Figure 3 schematically shows how the images are, as obtained by the device, by means of which the values for ovalization, buckling, planes and rolling parameters are obtained.

## DETAILED DESCRIPTION OF THE INVENTION

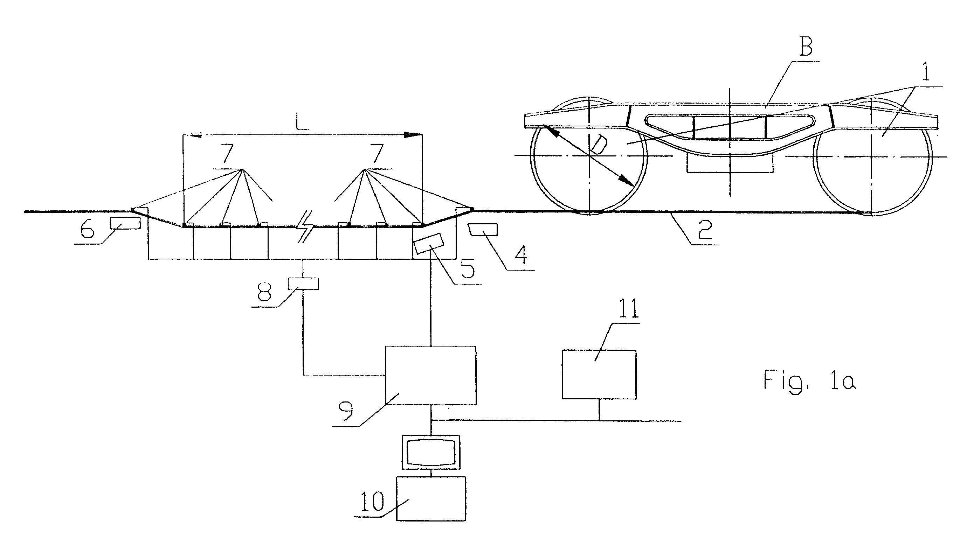

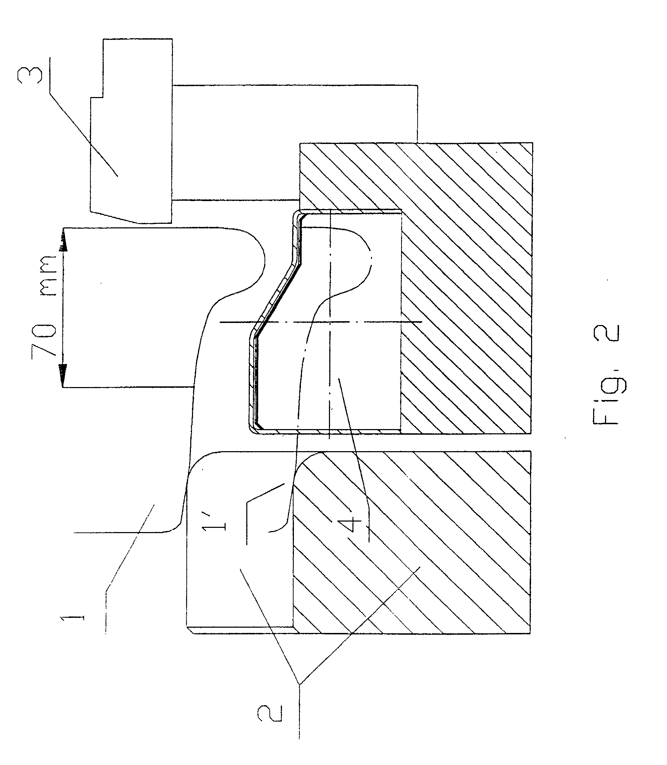

Referring to Figure 1a, a bogie B with wheels (1) to be measured is seen, which circulates along a rolling rail (2), being centred by means of a counterrail (3) (Figure 2). Said counterrail also centres the wheels during the measuring process. A collimated laser beam, coming from a laser beam system (6), illuminates the flange and the rolling profile while the wheel crosses the measuring area (L). The contour shadow is projected on a screen (4) and the images produced during the wheel advance are captured by a video camera (5), digitalised in an artificial viewing system (9) and transmitted in real time to a computer (10). The image projected on the screen (4) is not clear due to light diffraction, whereby the artificial viewing system uses suitable mathematical algorithms, including compensation of diffraction and possible optical deffects, to extract the profile with a high resolution (subpixel), maintained unchanged independently from the instantaneous distance between the wheel and the screen. Image capture is enabled and disabled by means of optical wheel position sensors (7). A first wheel sensor (7) indicates to the measuring device, through a control system (8), that the first wheel is entering in the measurement area, such that a second sensor (7) enables image capture. Knowing the time spent between enabling the first and second sensors, the control system (8) calculates the speed at which the train travels. The entrance of a second wheel in the measurement area will disable image capture in the first wheel, which will not be enabled again until the first wheel had left said area, so that it is assured that measurements are made only when there is a single wheel in the measuring area.

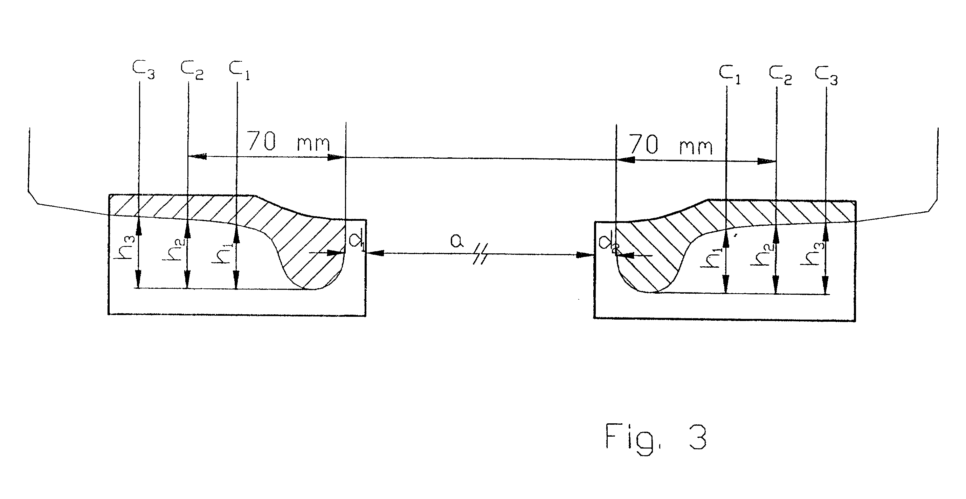

The total number of images captured per wheel is independent from the train speed, since the control system (8) calculates the number of images per second that must be sent by the camera (5) to the artificial viewing system (9), according to train speed, known on entering the measuring area. The artificial viewing system (9) calculates from the obtained images and after compensating diffraction effects by using suitable mathematical algorithms, the parameters necessary to obtain ovalization, buckling, planes and rolling parameters relative to flange thickness and height, qR, distance between the inside faces, wheel diameter and other parameters measured from the wheel profile, since reproductions are obtained of said profiles like those detailed in Figure 3. The values and images obtained are sent to a computer (10) where they will be displayed and the results stored. At least one of the images obtained is also stored in said computer, so that the obtained profile can be compared with other standard profiles and even with profiles previously stored for the same wheel. Likewise, said computer can be connected to other measuring equipment (11), as, for example, automatic detection equipment for defects in wheels, measuring equipment of the diameter difference between wheels of a same axle, etc., exchanging data with said equipment.

Except for the computer (10), common to both sides of the rail, the remaining device components are repeated symmetrically for the opposite wheel.

The measurement area (L) will correspond to the development length of the wheel with the greatest diameter to be measured.

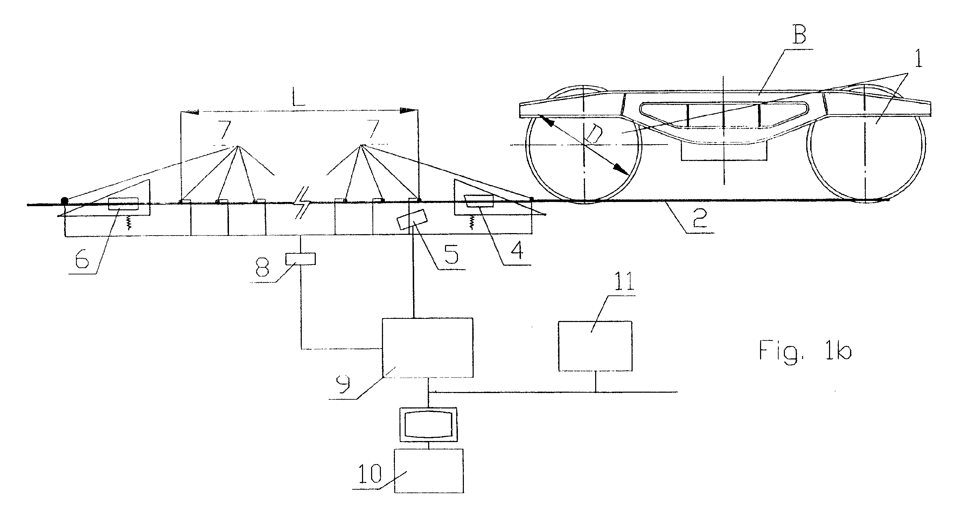

Figure 1b shows a variation of the described device in which the screen (4) and the collimated laser system (6) are housed in a mechanism capable of being adapted to the track when passing each wheel, recovering the measurement position once the wheel has passed. Apart from this variation, the rest of the operation is basically the same as that already described.

Referring to Figure 2, which relates to the device of Figure 1a, but taken from the travel direction, it is seen that the rail (2) and the wheel (1) are in two positions, position 1 (above) before entrance in the measuring area (L) and position 1' in which the wheel has descended and entered in said area. Centring is carried out in both areas by means of a couterrail (3), keeping the wheel in position during the measuring process. Likewise, the screen (4) is seen in Figure 2, on which the image of the lower edge of the rolling band is reflected continuously.

The ovalization is measured as the difference between the maximum and minimum height of the flange, based on the fact that the flange circumference does not ovalize, whereby that when the rolling band ovalizes, variations of the flange height are produced along the wheel development. Hence, three points on the wheel profile will be taken for the ovalization calculation. Said points will be selected as analysis point from their distances to the inside face of the wheel. It is normal that one of these points is located at 70 mm from the inside face.

The artificial viewing system measures, from each obtained image, the vertical distance h between each analysis point and the flange, obtaining the measurements $h_1$, $h_2$ and $h_3$ for different development points of the wheel. These measurements are illustrated in Figure 3.

The ovalization of the three rolling circles $c_1$, $c_2$ and $c_3$ corresponding to the three measurement points is obtained as the difference between the maximum and minimum values of the distance h obtained at each analysis point:

$$o_i = h_{imax} - h_{imin}$$

Buckling is calculated from the horizontal distance d between the inside face of each wheel at a determined height and the nearest limit of the screen. For each image, the sum of said distances d ($d_1 + d_2$) is calculated, obtaining buckling as the difference between the maximum and minimum of said sums:

$$a = (d_{il} + d_{2i})_{max} - (d_{il} + d_{2i})_{min}$$

The distance between the inside faces (DIF) is calculated for each image as the sum of the previous values d for each wheel plus the distance value a between screens. The mean of said values will be taken as the distance value between the inside faces:

$$DIF = \frac{\sum\limits_{i=1}^{n} (d_{1i} + a + d_{2i})}{n}$$

The rolling parameters for flange thickness and height and qR are measured directly over one or several images as desired. When using several images, the means of the measured values would be calculated.

The wheel diameter is calculated from mean diameter values $D_m$ and flange height h measured in the last machining. The value for said diameter is taken, adding twice the flange height in the last machining and then subtracting twice the height obtained as the mean value of the values measured by the device. The current diameter of the wheel will be:

$$D_{ma} = D_m + 2h - 2\frac{\sum\limits_{i=1}^{n} h_{2i}}{n}$$

where it has been assumed that point 2 is always measured at 70 mm from the inside face.

By means of acquiring an elevated number of images, the device is capable to detect surface defects, such as planes.

Although the above gathers the features considered as essential for the present invention, it will be understood that the latter can be varied and modified as indicated by those having the ordinary skill in the art. For this reason, it is intended that the scope of the invention is only limited by the contents of the attached claims.

**Claims**

1. A device for measuring ovalization, buckling, planes and rolling parameters of railway wheels using artificial viewing, **characterised in that** it comprises on each side of the railway track a measuring area (L); a rolling rail (2) along which the wheel (1) to be measured is made to pass at a speed of about 10 km/h; a counterrail (3) to centre said wheel (1) during the measuring process; a collimated laser beam coming from a laser system (6), illuminating the flange and the rolling profile whilst the wheel (1) crosses the measuring area; a screen (4) on which the contour shadow is projected; a video camera (5) to capture and transmit the images projected on the screen; an artificial viewing system (9) connected to the video camera which digitalises and processes the received images, obtaining the parameters to be measured relative to ovalization, buckling, planes and rolling parameters; a computer (10) connected to the artificial viewing system, showing the obtained values and storing the captured images; optical wheel position sensors (7) detecting the wheel presence and enabling and disabling image capture; and a control system (8) governing the sensors (7).

2. A device according to claim 1, **characterised by** the use of suitable mathematical algorithms which include the compensation of diffraction and possible optical defects, so that the profile is obtained at a high resolution independently from the instantaneous distance between the wheel and the screen.

3. A device according to claims 1 and 2, **characterised in that** the control system (9) calculates the vehicle speed from the time spent between enabling a sensor (7) and the consecutive one.

4. A device according to the previous claims, **characterised in that** the control system (8) calculates the total number of images the video camera (5) must capture and send per second to the artificial viewing system (9) as a function of the train speed, so that the number of images processed for each wheel is the same in all cases, independently from speed.

5. A device according to the previous claims, **characterised in that** the artificial viewing system (9) is designed to process at least 50 images per wheel.

6. A device according to the previous claims, **characterised in that** the control system (8) orders the video camera (5) to only capture images when there is a single one wheel in the measuring area (L).

7. A device according to the previous claims, **characterised in that** the computer (10) is connected to other measurement facilities (11), so that said computer (10) processes all the data obtained by the different facilities.

8. A device according to claims 1 to 6, **characterised in that** the measuring area is a few millimetres below the level of the rolling rail (2), so that the screen (4) and the collimated laser system (6) are housed below said rail, the wheel accessing the measuring area by means of a cradle-shaped rail.

9. A device according to claims 1 to 6, **characterised in that** the measuring area is at the same level as the rolling rail (2), so that the screen (4) and the collimated laser system (6) are housed in a mechanism capable of adapting itself to the rolling track on passage of the train, recovering the measurement position once the wheel has passed.

10. A process for measuring ovalization, buckling, planes and rolling parameters of railway wheels using a device according to the previous claims, **characterised in that** the measuring device is enabled by optical wheel position sensors (7); a collimated light beam is projected over the wheel (1) from a laser system (6) so that said light constantly illuminates the flange and rolling band while the wheel crosses the measuring area; obtaining images which are projected on a screen (4) and captured by a video camera (5), processing said images in an artificial viewing system (9) and displaying the obtained results in a computer (10).

Fig. 1a

Fig. 1b

Fig. 2

EP 1 324 005 A2

Fig. 3